# EUROPEAN PATENT APPLICATION

(11) **EP 1 052 485 A2**
(43) Date of publication of application: **15.11.2000**
(21) Application number: 00304029.2
(22) Date of filing: 12.05.2000
(51) Int. Cl.: G01L 1/20, G01L 5/22

(54) **Conductive textile assembly**

(30) Priority: 12.05.1999 GB 9911081
(71) Applicant: BRUNEL UNIVERSITY, Middlesex, UB8 3PH (GB)
(72) Inventor: Burkitt, John, Middlesex UB8 3PH (GB); Manoy, Russell, Middlesex UB8 3PH (GB)
(74) Representative: Jehan, Robert

(57) **Abstract**

A conductive textile assembly (10) includes first and second conductive layers (12,14) separated by an intermediate insulating layer (16). The intermediate insulating layer (16) is substantially water-resistant. One or both of the conductive layers (12,14) is provided with fibres (18) able to cross the insulating layer (16) to provide an electrical connection between the conductive layers (12,14) upon application of a compressive force to the assembly (10). The insulating layer (16) ensures that the assembly (10) is water resistant.

## Description

The present invention relates to a conductive textile assembly for use, for example in a switch or pressure sensor, preferably formed from a plurality of conductive fabric layers separated by one or more insulating layers.

There are applications, for example in hospital beds, clothing, computing and many other applications, where it would be advantageous to provide a switch or pressure sensor which is flexible. Examples of pressure sensors are given in British Patent Application Nos. 9824037.7 and 9811021.6. These earlier pressure sensors generally provide two or more conductive layers of a textile material with an insulating layer interposed between two adjacent conductive layers. The insulating layer is such that it spaces the conductive layers apart but allows contact with the conductive layers and in practice closes an electrical circuit, when pressure is applied to the pressure sensor.

There are situations where it would be advantageous to provide such a pressure sensor or switch which is water resistant in order to prevent any undesired short circuiting of the sensor or switch.

According to an aspect of the present invention, there is provided a conductive textile assembly including first and second conductive layers separated by an intermediate insulating layer, wherein the intermediate insulating layer is substantially water-resistant.

It is believed that such an arrangement can provide a considerably better solution than attempting to waterproof one of the outer layers of the pressure sensor or switch as it is not dependent upon retention of the integrity of the outer water-resistant layer and therefore upon wear and tear.

It is envisaged that some embodiments of the insulating layer may be a composite layer which can include a plurality of sublayers, such as a water-impermeable sub-layer and a spacing sub-layer.

Preferably, the intermediate layer is formed of or includes a micro-porous fabric layer which allows the passage of water vapour but not water droplets.

The intermediate layer is possibly formed from a fabric of very fine filaments, preferably around 4000 per cm.

In the preferred embodiment, the micro-porous fabric may be formed of one or more of the following fabrics: Pertex(TM) and Gortex(TM).

The conductive layers are preferably formed from a fabric or fabric-like interior which includes a plurality of filaments extending beyond a plane of the fabric. The filaments are such as to be able to pass through the pores of the intermediate layer and provide conductivity. An example of fabric for the conductive layers is Gorix(TM).

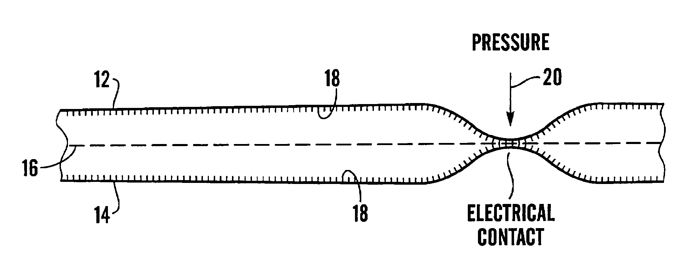

An embodiment of the present invention is described below, by way of example only, with reference to the accompanying drawing in which the sole Figure is a cross-sectional view of an embodiment of conductive textile assembly.

Referring to the Figure, the embodiment of assembly 10 shown is formed of two conductive layers 12, 14 separated by an insulating layer 16. The insulating layer 16 is made of a material which is impermeable to water droplets and which therefore can prevent shorting between the two conductive layers 12, 14 in the presence of water.

In the preferred embodiment, the insulating layer 16 is formed of a micro-porous fabric having small pores to allow electrical contact between the two conductive layers 12, 14 on closing of the switch 10.

Preferably, the insulating layer 16 is formed for a fabric such as Pertex(TM) or Gortex(TM) or any other material which provides holes small enough to be impermeable to water droplets. Of course, it is not necessary for the insulating layer 16 to be of a fabric but can simply be any layer with such small holes therein. Layer 16 is preferably flexible.

In this embodiment, the pores of the layer 16 allow water vapour to pass therethrough and provide a seal against water droplets in the region of 5m hydrostatic head.

In an embodiment where the layer 16 is a fabric, the filaments of the fabric are very fine at 4000 per cm.

The conductive layers 12, 14 are provided with filaments 18 of such a size that they can pass through the pores in the insulating layer 16. In the preferred embodiment, the conductive layers 12, 14 are formed from a fabric such as Gorix(TM) which is woven from a yarn which is itself manufactured from short fibres. The result of the short fibres in the yarn is that the fabric has a fine pile or knapp of fibres.

In use, when pressure is applied to the textile assembly 10, as shown by arrow 20, the conductive layers 12, 14 are pressed onto the insulating layer 16 and pass through the pores in the insulating layer 16 so as to touch one another and provide electrical contact. The switch is thus closed, in use providing a short circuit.

The assembly 10 can be used in any situation in which water may be present. It could thus be useful outdoors, within water or in any other environment where water or any other liquid may be present.

Of course, it is not necessary for both conductive layers 12, 14 to be formed of a material providing short fibres 18 as in some embodiments only one of the layers 12, 14 can be provided with such fibres. It will be apparent in this alternative and in the preferred embodiment that the length of fibres 18 is sufficient relative to the thickness of the insulating layer 16, that is being at least greater than half the thickness of the insulating layer 16 when both conductive layers 12, 14 are provided with fibres 18 and greater than the thickness of the insulating layer 16 when only one of the conductive layers 12, 14 is provided with fibres 18.

The insulating layer 16 could, in some embodiments, be formed as a composite layer including, for example, one layer of micro-porous fabric and one layer of spacing material, such as some form of elastomeric layer to ensure that the conductive layers 12, 14 are pushed apart when the switch is not depressed.

Moreover, the switch 10 can be provided with more than two conductive layers and more than one insulating layer, in which case the switch 10 could provide an indication of different pressures applied to the switch in relation to the numbers of conductive layers which are electrically shorted to one another on application of pressure to the switch.

The switch 10 could be operated in the manner described in either of the above-mentioned British patent applications and could be adapted to incorporate the specific features mentioned in those two British patent applications.

## Claims

1. A conductive textile assembly including first and second conductive layers separated by an intermediate insulating layer, wherein the intermediate insulating layer is substantially water-resistant.

2. An assembly according to claim 1, wherein the insulating layer is a composite layer.

3. An assembly according to claim 2, wherein the insulating layer includes a water-impermeable sub-layer and a spacing sub-layer.

4. An assembly according to any preceding claim, wherein the intermediate layer is formed of or includes a micro-porous fabric layer which allows the passage of water vapour but not water droplets.

5. An assembly according to claim 4, wherein the micro-porous fabric may be formed of Pertex(TM) or Gortex(TM).

6. An assembly according to any preceding claim, wherein the intermediate layer is formed from a fabric of fine filaments.

7. An assembly according to claim 6, wherein the intermediate layer is formed of a fabric of filaments having a density of around 4000 per cm.

8. An assembly according to any preceding claim, wherein one or more of the conductive layers are formed from a fabric or fabric-like interior which includes a plurality of filaments extending beyond a plane of the fabric.

9. An assembly according to any preceding claim, wherein one or both of the conductive layers is formed of Gorix(TM).
